# EUROPÄISCHE PATENTSCHRIFT

(11) **EP 3 946 866 B1**
(45) Veröffentlichungstag und Bekanntmachung des Hinweises auf die Patenterteilung: **07.06.2023**
(21) Anmeldenummer: 20718590.1
(22) Anmeldetag: 03.04.2020
(51) Int. Cl.: B28C 7/16, F04B 15/02, F04B 49/06, E04G 9/10, E04G 21/04

(54) **COMPUTERGESTÜTZTES VERFAHREN UND EINRICHTUNG ZUR OPTIMIERTEN STEUERUNG DER FÖRDERLEISTUNG EINER BETONPUMPE ODER DERGLEICHEN**
COMPUTER-AIDED METHOD AND DEVICE FOR OPTIMIZED CONTROL OF THE DELIVERY RATE OF A CONCRETE PUMP OR THE LIKE
PROCÉDÉ ASSISTÉ PAR ORDINATEUR ET DISPOSITIF PERMETTANT LA COMMANDE OPTIMISÉE DE LA CAPACITÉ DE REFOULEMENT D'UNE POMPE À BÉTON OU SIMILAIRE

(30) Priorität: 03.04.2019 DE 102019108781
(43) Veröffentlichungstag der Anmeldung: 09.02.2022
(73) Patentinhaber: PERI SE, 89264 Weißenhorn (DE)
(72) Erfinder: BÄCHLE, Helmut, 89264 Weißenhorn (DE); STAVES, Henning, 89264 Weißenhorn (DE); BERNARD, Vanessa, 89264 Weißenhorn (DE); BAUMANN, Rüdiger, 89264 Weißenhorn (DE)
(74) Vertreter: Maiwald GmbH
(86) Internationale Anmeldenummer: PCT/EP2020/059488
(87) Internationale Veröffentlichungsnummer: WO 2020/201472

(56) Entgegenhaltungen:
- JP-A- S61 221 457
- JP-A- 2013 209 801
- JP-A- 2018 119 372

## Beschreibung

### Bezugnahme auf verwandte Anmeldungen

Die vorliegende Anmeldung beansprucht die Priorität der deutschen Patentanmeldung Nr. 10 2019 108 781.3, eingereicht am 3. April 2019.

Die vorliegende Erfindung betrifft ein Verfahren zur Steuerung der Förderleistung einer Betonpumpe oder dergleichen zur Befüllung einer Schalungsanordnung mit einer pumpfähigen Füllmasse, insbesondere Ortbeton, in Abhängigkeit von aushärtungsrelevanten Material- und Umgebungsparametern, wonach die eingebaute Füllmasse innerhalb der Schalungsanordnung abbindet. Weiterhin betrifft die Erfindung auch eine ein solches Verfahren durchführende elektronische Einrichtung, welche vorzugsweise per Computerprogramm gesteuert wird.

### Hintergrund der Erfindung

Das Einsatzgebiet der Erfindung erstreckt sich vornehmlich auf die Bautechnik. Zur Errichtung von Gebäuden kommen gewöhnlich Schalungsanordnungen in unterschiedlicher Gestalt und Abmessung vor, die beispielsweise als Wandschalungen, Stützenschalungen, Treppenschalungen, Unterzugschalungen und dergleichen verwendet werden. Prinzipiell bilden derartige Schalungen eine Gussform, in die eine flüssige Füllmasse, vorzugsweise ein Ortbeton, zur Herstellung von Gebäudeteilen eingebracht wird. Nach dem Abbinden, also Erhärten, der Füllmasse wird die Schalung im Regelfall entfernt und wiederverwendet. Die Befüllung des durch eine Schalungsanordnung geschaffenen Formraums mit vorzugsweise Ortbeton erfolgt auf der Baustelle meist über eine Betonpumpe, welche in der Regel Bestandteil eines Mischerfahrzeuges ist. Im Rahmen der vorliegenden Erfindung können jedoch auch stationäre Betonpumpen hinsichtlich ihrer Förderleistung mit der erfindungsgemäßen Lösung angesteuert werden. Außer Betonpumpen sind auch andere Medienpumpen hierfür geeignet, mit welchen eine pumpfähige Füllmasse zu dem erfindungsgegenständlichen Zweck gefördert wird. Als pumpfähige Füllmasse kommt insoweit beispielsweise auch eine Gipsmasse, eine Kunstharzmasse oder Kombinationen daraus in Betracht.

### Stand der Technik

Aus der DE 10 2008 017 123 A1 geht ein gattungsgemäßes Verfahren zur Steuerung der Förderleistung einer Betonpumpe hervor, welche hier als Mischerpumpe für Ortbeton ausgebildet ist. Der Ortbeton wird in einer Mischertrommel eines Fahrzeugs gemischt und über einen Pufferspeicher einer motorisch angetriebenen Betonpumpe zugeführt und von dieser über eine Förderleitung zur Betonierstelle, also in den Bereich des Formraums der Schalungsanordnung, gefördert. Der Antrieb der Betonpumpe wird dabei durch den Fahrer des Fahrzeugs über eine Fernbedienungseinheit ein- und ausgeschaltet. Der Füllstand in einem Pufferbehälter an der Mischertrommel wird demgegenüber automatisch überwacht und die Mengenzugabe von Ortbeton in den Pufferbehälter wird nach Maßgabe des Füllstands und in Abhängigkeit vom Antriebszustand der Betonpumpe gesteuert. Hierdurch wird in erster Linie eine Vergleichmäßigung des Materialflusses erreicht, obwohl die Betonzufuhr zur Befüllung der Schalungsanordnung bedarfsweise manuell ein- und ausgeschaltet wird.

Bei dieser manuellen Tätigkeit hat der Fahrer oder Bediener der Betonpumpe darauf zu achten, dass die Befüllung der Schalungsanordnung nicht zu schnell erfolgt, um eine Überbelastung der Schalungsanordnung zu vermeiden. Ein zu schnelles Befüllen einer Schalungsanordnung kann zu Schäden an den Schalungselementen bis hin zum Platzen der Schalungsanordnung führen. Dieses Sicherheitsrisiko kann im Extremfall sogar Ursache für tödliche Unfälle sein. Außerdem kann ein zu schnelles Befüllen einer Schalungsanordnung zu einer Verformung derselben und damit zu konvexen Bauteiloberflächen führen, welche einer aufwendigen Nachbearbeitung bedürfen, wenn nicht gar ein Abriss erforderlich ist. Andererseits führt eine zu langsame Befüllung der Schalungsanordnung durch eine analog zu gering manuell gewählte Förderleistung der Betonpumpe dazu, dass sich die hierdurch entstehende Verzögerung kumulativ verlängert. Denn Betonierarbeiten werden gewöhnlich in aufeinander aufbauenden Arbeitsschritten ausgeführt, wobei beispielsweise eine Kletterschalung zum Aufbau einer Wandstruktur von Arbeitsschritt zu Arbeitsschritt versetzt und befüllt wird. Dieser kumulative Effekt kann zu einer signifikanten Verlängerung der Bauzeit führen.

Eine manuelle Steuerung der richtigen Förderleistung einer Betonpumpe hängt somit stark von der Erfahrung des Fahrers oder Bedieners ab. Trotzdem können weitere Einflussfaktoren, wie temperatur- oder rezepturbedingte Schwankungsbreiten im Aushärtungsverlauf des Betons, zu unvorhersehbaren Qualitätsschwankungen führen.

JP 2013 209801 A offenbart ein Verfahren zur Steuerung der Förderleistung einer Betonpumpe zur Befüllung einer Schalungsanordnung mit einer pumpfähigen Füllmasse nach dem Oberbegriff des Anpruchs 1 und eine Einrichtung nach dem Oberbegriff des Anspruchs 7.

Es ist daher die Aufgabe der vorliegenden Erfindung, ein Verfahren und eine Einrichtung zur Steuerung der Förderleistung einer Betonpumpe oder dergleichen zur Befüllung einer Schalungsanordnung zu schaffen, welches/welche eine optimale Befüllungsgeschwindigkeit der Schalungsanordnung durch Abgleich mit den relevanten Material- und Umgebungsparametern gewährleistet.

### Offenbarung der Erfindung

Die Aufgabe wird ausgehend von einem gattungsgemäßen Verfahren zur Steuerung der Förderleistung einer Betonpumpe zur Befüllung einer Schalungsanordnung durch Anspruch 1 gelöst. Hinsichtlich einer das Verfahren durchführenden Einrichtung wird auf Anspruch 7 verwiesen. Der Anspruch 14 gibt ein das erfindungsgemäße Verfahren verkörperndes Computerprogramm wieder, das auf einem maschinenlesbaren Datenträger oder einem Cloud-Speicher gemäß Anspruch 15 abrufbar hinterlegt sein kann.

Die Erfindung schließt die verfahrenstechnische Lehre mit der Abfolge folgender Schritte ein:
- Ermittlung einer zulässigen Steiggeschwindigkeit für die Befüllung der Schalungsanordnung mit der Füllmasse, vorzugsweise Ortbeton, anhand von Material- und Umgebungsparametern,
- Messung des auf die Schalungsanordnung während der Befüllung einwirkenden statischen Füllmassendrucks,
- Berechnung der zulässigen Förderleistung der Betonpumpe in Abhängigkeit von der ermittelten zulässigen Steiggeschwindigkeit und des gemessenen statischen Füllmassendrucks an der Schalungsanordnung.

Die so berechnete optimale Förderleistung wird anschließend als Ansteuersignal für die Betonpumpe oder dergleichen verwendet, indem das Ansteuersignal vorzugsweise einer elektronischen Pumpenansteuerungseinheit der Betonpumpe oder dergleichen vorgegeben wird. Dies kann beispielsweise im Rahmen einer Regelung in Form einer Sollwert-Vorgabe erfolgen.

Die Erfindung beruht auf der Erkenntnis, dass die zulässige Steiggeschwindigkeit der Füllmasse innerhalb der Schalungsanordnung, von welcher der auf diese ausgeübte Füllmassendruck und die entlang der Schalungshöhe auftretende Druckverteilung abhängt, vornehmlich von der Füllmassenrezeptur, beispielsweise der individuellen Betonrezeptur und der daraus entstehende Frischbeton, und der auf der Baustelle beim Einbau der Füllmasse herrschenden Außentemperatur als wesentliche Material- bzw. Umgebungsparameter beeinflusst wird. Die entsprechenden Füllmassen-Rezepturdaten können dabei den Bauplanungsinformationen entnommen werden, beispielsweise den Unterlagen zur Ausführungsplanung, in denen die zu verwendenden Baustoffe festgelegt sind. Aus den ebenfalls vorhandenen geometrischen Maßdaten des zu errichtenden Bauwerks und den hinsichtlich der Schalung hieraus abgeleiteten Bauplanungsinformationen über die Art und Abmessungen der Schalung und der dergleichen lassen sich diesbezügliche Umgebungsparameter, wie Einfüllhöhe, Bauteilform und dergleichen, ebenfalls ermitteln. So führt die Verwendung einer relativ schwachen Schalungsanordnung zu entsprechend geringeren zulässigen Steiggeschwindigkeiten für die Befüllung, um die Schalungsanordnung nicht zu überlasten. Eine relativ stärkere Schalungsanordnung kann dagegen eine entsprechend höhere Steiggeschwindigkeit für die Befüllung derselben verkraften. Die diesbezüglichen Umgebungsparameter lassen sich per Test oder Messung ermitteln.

Im Falle des Umgebungsparameters Außentemperatur ist beispielsweise bei relativ hohen Außentemperaturen mit einem entsprechend schnellen Abbinden des Ortbetons zu rechnen, so dass unter diesen Bedingungen eine entsprechend hohe Steiggeschwindigkeit für die Befüllung der Schalungsanordnung gefahren werden kann. Die diesbezüglichen Zusammenhänge lassen sich ebenfalls vorzugsweise durch Tests oder Messungen ermitteln. Dabei können auch andere Parameter eine Rolle spielen, wie beispielsweise die zu betonierende Wandstärke, die Art der zu umgießenden Bewehrung, die die Einfüllhöhe bestimmende Schalungshöhe und dergleichen.

Vorzugsweise wird die Außentemperatur über einen Temperatursensor vor Ort auf der Baustelle gemessen, insbesondere im Bereich des Mischerfahrzeugs oder der Schalungsanordnung. So kann der Temperatursensor beispielsweise im Füllraum der Schalungsanordnung, außenseitig an der Schalungsanordnung oder in dessen Nähe angebracht werden. Ebenfalls ist eine örtliche Baustellenmessung, beispielsweise im Rahmen einer Baustellen-Wetterstation, möglich. Daneben ist es jedoch auch denkbar, dass Informationen hinsichtlich der herrschenden Außentemperatur aus einer öffentlich zugänglichen lokalen Wetterdatenbank übernommen werden, so dass ein separater Temperatursensor und die hierfür erforderliche Signalübertragungstechnik entfallen können.

Die erfindungsgemäß vorgesehene Messung des auf die Schalungsanordnung während der Befüllung einwirkenden statischen Füllmassendrucks kann auf verschiedene Art erfolgen. Als statischer Füllmassendruck wird dabei derjenige Druck verstanden, den die im Wesentlichen ruhende eingefüllte Füllmasse auf die Schalungswandung ausübt. Dieser wird vorzugsweise durch eine im Bereich der Schalungsanordnung angeordnete Messsensorik gemessen. Gemäß eines ersten Ausführungsbeispiels kann die im Bereich der Schalungsanordnung angeordnete Messsensorik zur Messung des statischen Füllmassendrucks als ein gegenüberliegende Schalungsteile übergreifender Messbügel mit integriertem Druck- oder Zugmesssensor ausgebildet sein. Durch diese übergreifende Messanordnung lässt sich in einfacher Weise der nach außen gerichtete Füllmassendruck ermitteln. Dabei sollte der Messbügel an einer Stelle der Schalungsanordnung angesetzt werden, an welcher der größte Füllmassendruck zu erwarten ist. In der Regel wirkt im unteren Schalungsbereich aufgrund der an sich bekannten Druckverteilungszusammenhänge ein höherer Füllmassendruck als im oberen Schalungsbereich. Verstrebungen oder Versteifungen der Schalplatten dürfen den verformungsbedingten Messeffekt nicht beeinträchtigen. Der Messbügel sollte zudem längenverstellbar sein, um unterschiedlich weit beabstandete Schalungsteile zu umfassen.

Gemäß einer zweiten Ausführungsform wird vorgeschlagen, dass die im Bereich der Schalungsanordnung angeordnete Messsensorik zur Messung des statischen Füllmassendrucks als eine auf zumindest einer Schalungsaußenoberfläche aufgebrachte Dehnmessstreifenanordnung ausgebildet ist. Per Dehnmessstreifenanordnung lässt sich die durch den Füllmassendruck in der Schalungsanordnung hervorgerufene Bauteilspannung ermitteln, welche über die an sich bekannten physikalischen Zusammenhänge in den gewünschten Druckwert umwandelbar sind.

Gemäß einer alternativen Ausführungsform kann die im Bereich der Schalungsanordnung angeordnete Messsensorik auch als Druckmessdose oder dergleichen ausgebildet sein, welche in einen Durchbruch einer Schalungsplatte eingesetzt ist. Als geeignet für den erfindungsgegenständlichen Zweck haben sich handelsübliche Druckmessaufnehmer aus Metall erwiesen, die meist mit einer Glyzerinfüllung zur Messwertübertragung versehen sind und den Messwert über eine stirnseitige Elastomermembran aufnehmen. Daneben kann als Messensorik auch ein im Füllraum direkt in der Füllmasse enthaltener sogenannter verlorener Drucksensor verwendet werden. Ferner ist es auch denkbar, eine drucksensitive Schalplatte zu verwenden, in welche die Druckmessfunktion flächig integriert ist.

Die gewonnenen Messdaten können neben den hier zentral interessierenden Steuerzwecken auch in einer zentralen Datenbank zu Nachweiszwecken an einen Kunden/Bauherrn oder zu internen Dokumentationszwecken oder als Lerndaten für künstliche neuronale Netze verwendet werden. Ebenso ist eine Art live-Anzeige vor Ort zwecks manueller Kontrolle der Steuerung denkbar, die beispielsweise über eine Smartphone-App durch Zugriff auf die vorgenannte zentrale Datenbank erfolgen kann.

Aus zumindest einer Teilmenge der vorstehend erörterten Material- und Umgebungsparameter wird erfindungsgemäß die pro Zeiteinheit zu pumpende Menge an Füllmasse, also insbesondere Beton, ermittelt, welche der vorgenannten zulässigen Steiggeschwindigkeit entspricht, die wiederum die zulässige Förderleistung der Betonpumpe oder dergleichen bestimmt. Dabei wird über den statischen Füllmassendruck oder den Füllmassendruckverlauf entlang der Einfüllhöhe der Schalungsanordnung insbesondere kontrolliert, ob infolge eines unterschwelligen Füllmassendrucks die Förderleistung erhöht werden kann, oder ob infolge eines überschwelligen Füllmassendrucks die Förderleistung zu verringern ist, oder die Betonpumpe oder dergleichen vorübergehend abzuschalten ist. Durch eine entsprechende Unterbrechung der Pumpenförderung wird der Füllmasse hinreichend Zeit gegeben, um durch beginnende Aushärtungsprozesse den auf die Schalung ausgeübten Füllmassendruck zu verringern. Je nach Anwendungsfall können gegebenenfalls auch weitere Steuerungsparameter für die Betonpumpe, wie beispielsweise die Fließgeschwindigkeit des Frischbetons oder dessen Verteilung im Füllraum der Schalungsanordnung berücksichtigt werden.

Das vorstehend beschriebene erfindungsgemäße Steuerverfahren lässt sich mit einer elektronischen Einrichtung umsetzen, welche gemäß einem bevorzugten Ausführungsbeispiel eine Rechnereinheit umfasst, in welche die Funktionen der Analyseeinheit und der Auswerteeinheit softwaremäßig implementiert sind. Die Rechnereinheit kann dabei im Sinne einer dezentralen Lösung lokal auf der Baustelle angeordnet sein; vorzugsweise wird jedoch vorgeschlagen, die Rechnereinheit oder zumindest Teile hiervon an zentraler Stelle, beispielsweise in Form eines ortsfernen Servers mit entsprechender Datenbankanbindung, auszubilden, welcher über geeignete Kommunikationsverbindungen, beispielsweise Datenfunk, Wireless LAN, Internet und dergleichen, mit lokalen Komponenten, beispielsweise der Pumpensteuereinheit der Betonpumpe oder dergleichen, zu den Ansteuerzwecken in Verbindung steht und über möglichst denselben Kommunikationskanal die von der Messsensorik an der Schalungsanordnung ermittelten Messsignale zu dem vorstehend erörterten Zweck empfängt. Daneben sind auch andere zentrale, dezentrale oder geteilte Systemkonfigurationen denkbar.

### Detailbeschreibung der Zeichnung

Weitere, die Erfindung verbessernde Maßnahmen werden nachstehend gemeinsam mit der Beschreibung von Ausführungsbeispielen der Erfindung anhand der Figuren näher dargestellt. Es zeigt:
- Fig. 1: eine schematische Darstellung eines Gesamtsystems für die Befüllung einer Schalungsanordnung, in welchem eine erfindungsgemäße Einrichtung zur Steuerung der Förderleistung einer Betonpumpe integriert ist,
- Fig. 2: eine schematische Detaildarstellung einer ersten Ausführungsform für eine Messsensorik zur Messung des statischen Füllmassendrucks an der Schalungsanordnung,
- Fig. 3: eine schematische Darstellung einer zweiten Ausführungsform für eine Messsensorik zur Messung des statischen Füllmassendrucks an der Schalungsanordnung,
- Fig. 4: ein Flussdiagramm zur Illustration der Abfolge der wesentlichen erfindungsmäßigen Verfahrensschritte, welche die in Fig. 1 enthaltene Einrichtung durchführt, und
- Fig. 5: ein Druckverteilungsdiagramm zur Veranschaulichung des Füllmassendrucks entlang der Schalungshöhe.

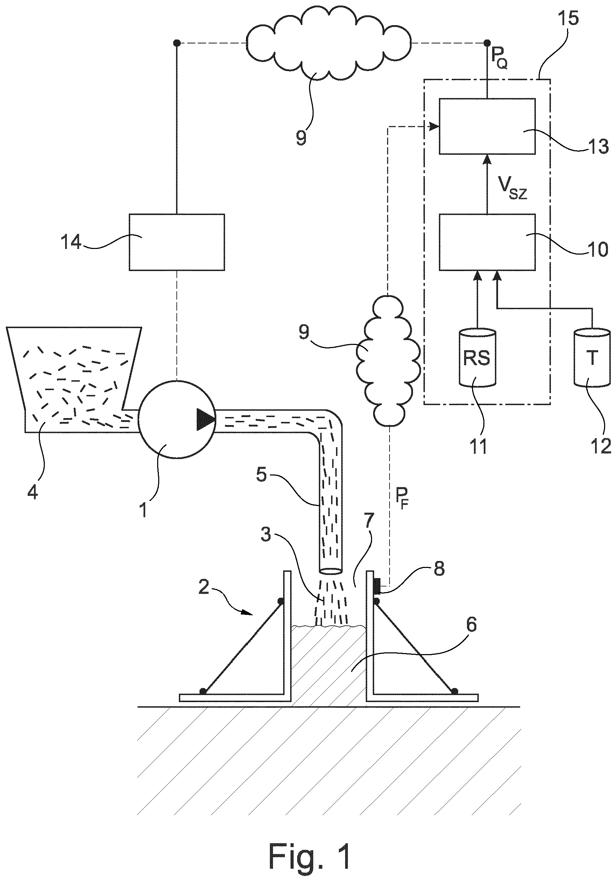

Gemäß Fig. 1 ist eine Betonpumpe 1 eines - nicht weiter dargestellten - Betonmischfahrzeugs zur Befüllung einer Schalungsanordnung 2 au einer - hier nur ausschnittsweise dargestellten - Baustelle mit einer pumpfähigen Füllmasse 3 vorgesehen, welche bei diesem Ausführungsbeispiel ein geeigneter Ortbeton ist.

Die Betonpumpe 1 fördert die Füllmasse 3 aus einem Pufferbehälter 4 des Betonmischfahrzeugs über eine örtlich positionierbare Rohrleitungsanordnung 5 in den Füllbereich der Schalungsanordnung 2. Die Schalungsanordnung 2 umfängt bei diesem Ausführungsbeispiel einen im Zuge eines vorausgegangenen Betonierschritts bereits ansatzweise aufgebauten Wandabschnitt 6, um im folgenden Betonierschritt des Wandabschnitt 6 nach Maßgabe einer vorliegenden Bauplanung den von der Schalungsanordnung 2 geschaffenen Füllraums 7 mit Ortbeton zu befüllen.

Die stark vereinfacht dargestellte Schalungsanordnung 2 besteht bei diesem Ausführungsbeispiel aus zwei gegenüberliegend zueinander angeordneten Schalungsteilen 2a und 2b, welche aus an sich bekannten Schalungssegmenten eines üblichen Baukastensystems realisiert sind.

An der Schalungsanordnung 2, hier konkret seitens des Schalungsteils 2b, ist gegenüberliegend des Füllraums 7 eine Messsensorik 8 zur Messung des auf die Schalungsanordnung 2 während der Befüllung mit der Füllmasse 3 einwirkenden statischen Füllmassendrucks p_{F} angeordnet. Denn infolge zunehmender Befüllung der Schalungsanordnung 2 mit der auszuhärtenden Füllmasse 3 nimmt die vom Füllraum 7 auf die Schalungsanordnung 2 einwirkende Belastung zu, welche sich infolge der nach außen gerichteten Kräfte in entsprechenden Bauteilspannungen äußert. Der in Analogie hierzu sehende Füllmassendruck p_{F} wird bei diesem Ausführungsbeispiel per drahtloser Kommunikationsverbindung an eine elektronische Auswerteeinheit 13 als Eingangswert weitergeleitet.

Eine zugeordnete Analyseeinheit 10 dient der Ermittlung einer zulässigen Steiggeschwindigkeit vsz für die Befüllung der Schalungsanordnung 2 mit der Füllmasse 3 anhand hierfür relevanter Material- und Umgebungsparameter. Hierfür gehen der Analyseeinheit 10 diverse Eingangswerte zu, welche steuerungsrelevante Material- und Umgebungsparameter RST umfassen. Dabei bilden die Füllmassen-Rezepturdaten Reinen Materialparameter, welcher in Form eines Einzelwerts oder eines Datensatzes Rezepturinformationen über die verwendete Füllmasse 3 liefert, da beispielsweise je nach Betonrezeptur eine materialspezifische Aushärtungskennlinie vorliegt, welche die zulässige Steiggeschwindigkeit vsz beim Befüllvorgang mitbestimmt. Derartige Füllmassen-Rezepturdaten R werden dabei von einer diese Bauplanungsinformationen enthaltenen Planungsdatenbank 11 bereitgestellt. Die Planungsdatenbank 11 beinhaltet alle erforderlichen Informationen der Ausführungsplanung über das zu errichtende Bauwerk und somit auch die vorgeschriebenen Materialangaben hinsichtlich der Füllmassenzusammensetzung, die für den Bau des auszuführenden Wandabschnitts 6 vorgegeben sind.

Daneben beinhaltet die Planungsdatenbank 11 auch Informationen hinsichtlich von Schalungsmaßdaten S, woraus insbesondere die abschnittsweise Betonierhöhe, die abschnittsweise Betonierfläche, die Wandstärke eines Betonierabschnitts und dergleichen ableitbar sind, um auch diese für die Ermittlung der zulässigen Steiggeschwindigkeit vsz erforderlichen geometrischen Umgebungsparameter zu berücksichtigen.

Als weiterer relevanter Umgebungsparameter ist die auf der Baustelle herrschende Außentemperatur während des Betonierprozesses zu berücksichtigen, weil dieser den Abbindungsprozess und damit die zulässige Steiggeschwindigkeit vsz der einzufüllenden Füllmasse 3 beeinflusst. Bei diesem Ausführungsbeispiel wird der Umgebungsparameter hinsichtlich der Außentemperatur T ausgehend von einer entsprechend aktualisierten öffentlich zugänglichen Wetterdatenbank 12 geliefert.

Ausgehend von all diesen die zulässige Steiggeschwindigkeit vsz beeinflussenden Material-und Umgebungsparametern RST ermittelt die Analyseeinheit 10 die zulässige Steiggeschwindigkeit vsz für die Befüllung der Schalungsanordnung 2 mit der Füllmasse 3 und gibt diesen Wert an die Auswerteeinheit 13 zur Berechnung einer hierauf abgestimmten zulässigen Förderleitung P_{Q} der Betonpumpe 1 weiter. Die Auswerteeinheit 13 berücksichtigt daneben auch den durch die Messsensorik 8 gemessenen statischen Füllmassendruck p_{F} an der Schalungsanordnung 2 zu Kontrollzwecken. Dies bedeutet, dass die Auswerteeinheit 13 eine Verringerung der Förderleitung P_{Q} anfordert, falls der Füllmassendruck p_{F} einen oberen Grenzwert überschreitet. In analoger Weise wird die Förderleitung P_{Q} erhöht, falls der Füllmassendruck p_{F} unter einen zulässigen Grenzwert abfällt. Diese vornehmlich zu Kontrollzwecken dienende Regelung ist jedoch überlagert von der primären Ansteuerung der Betonpumpe 1 hinsichtlich ihrer Förderleitung P_{Q} über die die ermittelte zulässige Steiggeschwindigkeit vsz anhand der Material- und Umgebungsparameter RST. Die zulässige Steiggeschwindigkeit vsz ergibt sich aus den durch die Betonpumpe geförderten Volumenstrom in Verbindung mit den geometrischen Abmessungen des Füllraums 7. Anstelle des Kriteriums der Steiggeschwindigkeit vsz kann in Äquivalenz zu den erfindungsgegenständlichen Steuerzwecken auch ein anderer in Analogie hierzu stehender Parameter herangezogen werden.

Die so berechnete zulässige Förderleitung P_{Q} wird bei diesem Ausführungsbeispiel über einen zumindest teilweise drahtlosen Kommunikationskanal, hier unter Einbeziehung des Internets 9 von zentraler Stelle her an die lokal auf der Baustelle vorhandene Pumpenansteuereinheit 14 der Betonpumpe 1 als Ansteuersignal übertragen. Demgegenüber sind bei diesem Ausführungsbeispiel die Analyseeinheit 10 und die Auswerteeinheit 13 per Software in einer zentralen Rechnereinheit 15 untergebracht, welche somit einen ortsfernen Steuerserver darstellt. Diese Rechnereinheit 15 hat Zugriff auf die hierin integrierte Planungsdatenbank 11 sowie die öffentliche Wetterdatenbank 12 und - ebenfalls über zumindest teilweise drahtloser Kommunikation - per Internet 9 auf das Sensorsignal der Messsensorik 8 vor Ort auf der Baustelle. Dieses kann natürlich alternativ auch im Rahmen einer bidirektionalen Datenübertragung über den Verbindungskanal der Pumpenansteuereinheit 14 geleitet werden.

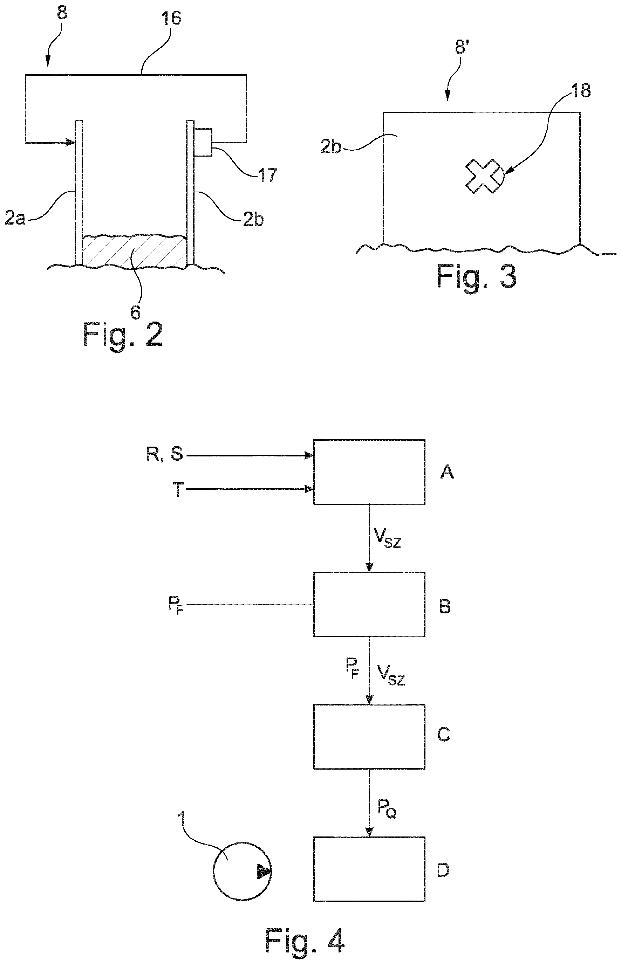

Die Figur 2 illustriert eine erste Ausführungsform zur Realisierung einer Messsensorik 8 zur Messung des vorstehend erörterten statischen Füllmassendrucks p_{F}. Hierfür kommt ein gegenüberliegende Schalungsteile 2a und 2b übergreifender Messbügel 16 zum Einsatz, zu dessen einem Ende ein Druck- oder Zugmesssensor 17 integriert ist. Bei der hier dargestellten Anordnung handelt es sich speziell um einen Drucksensor. Ist ein solcher Sensor im Mitteilbereich des Messbügels 16 integriert, so würde es sich konkret um einen Zugsensor handeln, um analoge Messwerte zu erhalten.

Bei dem in Figur 3 illustrierten Ausführungsbeispiel handelt sich bei der zu demselben Zweck verwendeten Messsensorik 8` um eine auf der Oberfläche eines Schalungsteils 2b aufgebrachten Dehnmessstreifenanordnung 18, welche an geeigneter Stelle die lokalen Bauteilspannungen im Schalungsteil 2b misst, um hieraus auf den anstehenden statischen Füllmassendruck p_{F} rückzuschließen.

Gemäß Figur 4 erfolgt zusammenfassend die Steuerung der Förderleitung P_{Q} für die Betonpumpe 1 in Abfolge der nachstehend aufgeführten Schritte, welche vorzugsweise softwaretechnisch in Form eines Computerprogramms mit Programmcodemitteln zur Durchführung der Schritte umgesetzt werden.

Zunächst erfolgt eine Ermittlung A einer zulässigen Steiggeschwindigkeit vsz für die Befüllung einer Schalungsanordnung mit einer geeigneten Füllmasse anhand zur Verfügung gestellter Material- und Umgebungsparameter RST, die hier aus verschiedenen Quellen stammen.

Parallel zum Befüllen der Schalungsanordnung mit der Füllmasse erfolgt ein Messen B des auf die Schalungsanordnung hierbei einwirkenden statischen Füllmassendrucks p_{F}, der als Messwert zur Verfügung gestellt wird.

Anschließend wird eine Berechnung C hinsichtlich einer zulässigen Förderleitung P_{Q} für die Betonpumpe 1, welche proportional zum geförderten Volumenstrom ist, in Abhängigkeit der ermittelten zulässigen Steiggeschwindigkeit vsz oder einen hierzu in Analogie stehenden Kennwert und des gemessenen statischen Füllmassendrucks p_{F} an der Schalungsanordnung zu Kontrollzwecken vorgenommen. Im finalen Schritt erfolgt eine Übermittlung D der berechneten Förderleitung P_{Q} beziehungsweise des Analogiewerts an die Pumpenansteuerung der Betonpumpe 1 in Form eines Ansteuersignals.

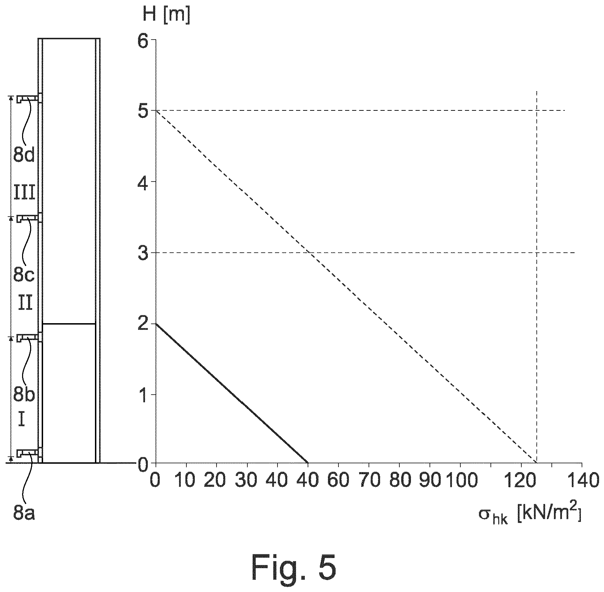

Mit der Fig. 5 wird die Verteilung des Füllmassendrucks entlang der Schalungshöhe H von 6 Metern für eine Betonierhöhe von im Endzustand 5 Metern in drei aufeinander aufbauenden Betonierschritten I. bis III. veranschaulicht. Durch Einfüllen des Frischbetons in den Füllraum der Schalungsanordnung wird ein statischer Flächendruck δₕₖ auf die Schalungsanordnung erzeugt. Wenn die Aushärtung der Füllmasse von unten her beginnt, verringert sich in Abhängigkeit hierzu dieser Füllmassendruck. Ist die Füllmasse hinreichend ausgehärtet, kann aufbauend hierauf der nächste Betonierschritt durchgeführt werden. Die drei Betonierschritte I. bis III. ergeben sich aus der maximalen Belastbarkeit der Schalungsanordnung von bis zu 50 kN/m² pro Betonierschritt, was eine maximale Einfüllhöhe von ca. 1,8 Metern pro Betonierschritt ergibt, ersichtlich durch die Dreiecksmarkierung. Überwacht wird der Füllmassendruck hier durch insgesamt vier die Messensorik 8a bis 8d bildenden Druckmessdosen, die entlang der Einfüllhöhe an der Schalungsanordnung angeordnet sind.

Die Erfindung ist nicht beschränkt auf das vorstehend beschriebene bevorzugte Ausführungsbeispiel nebst Abwandlungen hiervon. Es sind vielmehr auch andere Varianten denkbar, welche vom Schutzbereich der nachfolgenden Ansprüche mit umfasst sind. So ist es beispielsweise auch denkbar, die Recheneinheit zur Ermittlung des Ansteuersignals der Betonpumpe lokal in einem Betonmischerfahrzeug oder stationär auf der Baustelle anzuordnen, wobei die erforderlichen Bauplanungsinformationen und weiteren Material- und Umgebungsparameter per Datenfernübertragung, beispielsweise über einen Mobilfunkkanal, zur Verfügung gestellt werden. Ferner können auch andere Material- und Umgebungsparameter zu den erfindungsgegenständlichen Ansteuerzwecken herangezogen werden, sofern diese einen Einfluss auf den Abbindungsprozess der Füllmasse haben.

### Bezugszeichenliste

- 1: Betonpumpe
- 2: Schalungsanordnung
- 3: Füllmasse
- 4: Pufferbehälter
- 5: Rohrleitungsanordnung
- 6: Wandabschnitt
- 7: Füllraum
- 8: Messsensorik
- 9: Internet
- 10: Analyseeinheit
- 11: Planungsdatenbank
- 12: Wetterdatenbank
- 13: Auswerteeinheit
- 14: Pumpenansteuereinheit
- 15: Rechnereinheit
- 16: Messbügel
- 17: Druck- oder Zugmesssensor
- 18: Dehnmessstreifenanordnung

- A: Ermittlungsschritt
- B: Messschritt
- C: Berechnungsschritt
- D: Übermittlungsschritt

- P_{Q}: Förderleistung
- p_{F}: Füllmassendruck
- vsz: zulässige Steiggeschwindigkeit
- RST: Material- und Umgebungsparameter
- R: Füllmassen-Rezepturdaten
- S: Schalungsmaßdaten
- T: Umgebungstemperatur
- H: Schalungshöhe
- δₕₖ: statischer Flächendruck
- I. - III.: Betonierschritte

## Patentansprüche

1. Verfahren zur Steuerung der Förderleistung (P_{Q}) einer Betonpumpe (1) zur Befüllung einer Schalungsanordnung (2) mit einer pumpfähigen Füllmasse (3) in Abhängigkeit von aushärtungsrelevanten Material- und Umgebungsparametern (RST), wonach die eingebaute Füllmasse (3) innerhalb der Schalungsanordnung (2) abbindet, umfassend den Schritt:
- Ermittlung einer zulässigen Steiggeschwindigkeit (vsz) für die Befüllung der Schalungsanordnung (2) mit der Füllmasse (3) anhand der Material- und Umgebungsparameter (RST), und ist **gekennzeichnet durch** die folgenden zusätzlichen Schritte:
- Messung des auf die Schalungsanordnung (2) während der Befüllung einwirkenden statischen Füllmassendrucks (p_{F}),
- Berechnung der zulässigen Förderleistung (P_{Q}) der Betonpumpe (1) in Abhängigkeit von der ermittelten zulässigen Steiggeschwindigkeit (vsz) und des gemessenen statischen Füllmassendrucks (p_{F}) an der Schalungsanordnung (2).

2. Verfahren nach Anspruch 1,
**dadurch gekennzeichnet, dass** die Material- und Umgebungsparameter (RST) ausgewählt sind aus einer Parametergruppe umfassend: Füllmassen-Rezepturdaten (R), Schalungsmaßdaten (S), Außentemperatur (T).

3. Verfahren nach Anspruch 2,
**dadurch gekennzeichnet, dass** die Füllmassen-Rezepturdaten (R), aus welchen insbesondere eine materialspezifische zeitliche Aushärtungskennlinie hervorgeht oder ableitbar ist, ausgehend von vorliegenden Bauplanungsinformationen einer Bauplanungsdatenbank (11) bereitgestellt wird.

4. Verfahren nach Anspruch 2,
**dadurch gekennzeichnet, dass** die aus den Schalungsmaßdaten (S) hervorgehenden Informationen, insbesondere eine abschnittsweise Betonierhöhe, Betonierfläche, Wandstärke, ausgehend von vorliegenden Bauplanungsinformationen aus der Bauplanungsdatenbank (11) bereitgestellt wird.

5. Verfahren nach Anspruch 2,
**dadurch gekennzeichnet, dass** die Außentemperatur (T) über einen Temperatursensor auf einer Baustelle gemessen wird oder von einer öffentlichen Wetterdatenbank (12) bereitgestellt wird.

6. Verfahren nach Anspruch 1,
**dadurch gekennzeichnet, dass** die Messung des auf die Schalungsanordnung (2) während der Befüllung einwirkenden statischen Füllmassendrucks (p_{F}) durch eine im Bereich der Schalungsanordnung (2) angeordnete Messsensorik (8) durchgeführt wird.

7. Einrichtung zur Durchführung des Verfahrens nach einem der vorstehenden Ansprüche, umfassend:
- eine Analyseeinheit (10) zur Ermittlung einer zulässigen Steiggeschwindigkeit (vsz) für die Befüllung der Schalungsanordnung (2) mit der Füllmasse (3) anhand der Material- und Umgebungsparameter (RST), **dadurch gekennzeichnet, dass** die Einrichtung ferner umfasst:
- eine Messsensorik (8; 8') zur Messung des auf die Schalungsanordnung (2) während der Befüllung einwirkenden statischen Füllmassendrucks (p_{F}),
- eine Auswerteeinheit (13) zur Berechnung der zulässigen Förderleistung (P_{Q}) der Betonpumpe (1) in Abhängigkeit der durch die Analyseeinheit (10) ermittelten zulässigen Steiggeschwindigkeit (vsz) und des durch die Messsensorik (8) gemessenen statischen Füllmassendrucks (p_{F}) an der Schalungsanordnung (2).

8. Einrichtung nach Anspruch 7,
**dadurch gekennzeichnet, dass** die im Bereich der Schalungsanordnung (2) angeordnete Messsensorik (8) zur Messung des statischen Füllmassendrucks (p_{F}) als ein gegenüberliegende Schalungsaußenoberflächen (2a, 2b) übergreifender Messbügel (16) mit integriertem Druck- oder Zugmesssensor (17) ausgebildet ist.

9. Einrichtung nach Anspruch 7,
**dadurch gekennzeichnet, dass** die im Bereich der Schalungsanordnung (2) angeordnete Messsensorik (8') zur Messung des statischen Füllmassendrucks (p_{F}) als auf zumindest einem Schalungsteil (2b) aufgebrachte Dehnmessstreifenanordnung (18) oder eingebrachten Druckmessaufnehmer ausgebildet ist.

10. Einrichtung nach Anspruch 7,
**dadurch gekennzeichnet, dass** die Analyseeinheit (10) mit einer zentralen Bauplanungsdatenbank (11) verbunden ist, welche Datensätze mit den benötigten Bauplanungsinformationen enthält, aus denen die Füllmassen-Rezepturdaten (R) und/oder die Schalungsmaßdaten (S) hervorgehen.

11. Einrichtung nach Anspruch 7,
**dadurch gekennzeichnet, dass** die an der Schalungsanordnung (2) angeordnete Messsensorik (8) zur Übermittlung der Messsignale mit einer Rechnereinheit (15) in zumindest teilweiser drahtloser Verbindung steht, in welche die Analyseeinheit (10) mit angeschlossener Bauplanungsdatenbank (11) und/oder die Auswerteeinheit (13) integriert sind.

12. Einrichtung nach einem der vorstehenden Ansprüche 7 bis 11,
**dadurch gekennzeichnet, dass** die pumpfähige Füllmasse (3) ein Ortbeton ist.

13. Einrichtung nach einem der vorstehenden Ansprüche 7 bis 12,
**dadurch gekennzeichnet, dass** diese mit einer Pumpenansteuereinheit (14) zur Übermittlung der berechneten Pumpenleistung (P_{Q}) zwecks dem entsprechender Ansteuerung der Betonpumpe (1) in Verbindung steht.

14. Computerprogramm mit Programmcodemitteln zur Durchführung der Schritte gemäß zumindest Anspruch 1, wenn das Computerprogramm auf einer Analyseeinheit (10) und Auswerteeinheit (13) beziehungsweise einer Rechnereinheit (15) einer Einrichtung nach einem der Ansprüche 7 bis 12 ausgeführt wird.

15. Maschinenlesbarer Datenträger oder Cloud-Speicher, auf dem das Computerprogramm nach Anspruch 14 abrufbar abgespeichert ist.

## Claims

1. Method for controlling the delivery rate (P_{Q}) of a concrete pump (1) for filling a formwork arrangement (2) with a pumpable filling compound (3) as a function of curing-relevant material and environmental parameters (RST), after which the installed filling compound (3) sets within the formwork arrangement (2), comprising the step:
- determining a permissible rate of ascent (vsz) for filling the formwork arrangement (2) with the filling compound (3) on the basis of the material and ambient parameters (RST) and is **characterized by** the following additional steps:
- measuring the static filling compound pressure (p_{F}) acting on the formwork arrangement (2) during filling,
- calculating the permissible delivery rate (P_{Q}) of the concrete pump (1) as a function of the determined permissible rate of ascent (vsz) and the measured static filling compound pressure (p_{F}) at the formwork arrangement (2).

2. Method according to claim 1,
**characterized in that** the material and environment parameters (RST) are selected from a parameter group comprising: filling compound formulation data (R), formwork dimension data (S), outside temperature (T).

3. Method according to claim 2,
**characterized in that** the filling compound formulation data (R), from which in particular a material-specific temporal curing characteristic is or can be derived, is provided on the basis of available construction planning information of a construction planning database (11).

4. Method according to claim 2,
**characterized in that** the information resulting from the formwork dimension data (S), in particular a section-by-section concreting height, concreting area, wall thickness, is provided on the basis of available construction planning information from the construction planning database (11).

5. Method according to claim 2,
**characterized in that** the outdoor temperature (T) is measured via a temperature sensor at a construction site or is provided by a public weather database (12).

6. Method according to claim 1,
**characterized in that** the measurement of the static filling compound pressure (p_{F}) acting on the formwork arrangement (2) during filling is carried out by a measuring sensor system (8) arranged in the region of the formwork arrangement (2).

7. Apparatus for carrying out the method according to any one of the preceding claims, comprising:
- an analysis unit (10) for determining a permissible rate of ascent (vsz) for filling the formwork arrangement (2) with the filling compound (3) on the basis of the material and ambient parameters (RST), **characterized in that** the apparatus further comprises
- a measuring sensor system (8; 8') for measuring the static filling compound pressure (p_{F}) acting on the formwork arrangement (2) during filling,
- an evaluation unit (13) for calculating the permissible delivery rate (P_{Q}) of the concrete pump (1) as a function of the permissible rate of ascent (vsz) determined by the analysis unit (10) and the static filling compound pressure (p_{F}) at the formwork arrangement (2) measured by the measuring sensor system (8).

8. Device according to claim 7,
**characterized in that** the measuring sensor system (8) arranged in the region of the formwork arrangement (2) for measuring the static filling compound pressure (p_{F}) is configured as a measuring bracket (16) with an integrated pressure or tension measuring sensor (17) overlapping opposite outer formwork surfaces (2a, 2b).

9. Device according to claim 7,
**characterized in that** the measuring sensor system (8') arranged in the region of the formwork arrangement (2) for measuring the static filling compound pressure (p_{F}) is configured as a strain gauge arrangement (18) applied to at least one formwork part (2b) or as an inserted pressure sensor.

10. Device according to claim 7,
**characterized in that** the analysis unit (10) is connected to a central contruction planning database (11) which contains data records with the required contruction planning information from which the filling compound formulation data (R) and/or the formwork dimension data (S) are derived.

11. Device according to claim 7,
**characterized in that** the measuring sensor system (8) arranged on the shuttering arrangement (2) is at least partially wirelessly connected to a computer unit (15) for transmitting the measuring signals, in which computer unit the analysis unit (10) with connected construction planning database (11) and/or the evaluation unit (13) are integrated.

12. Device according to any of the preceding claims 7 to 11,
**characterized in that** the pumpable filling compound (3) is an in-situ concrete.

13. Device according to any of the preceding claims 7 to 12,
**characterized in that** it is connected to a pump control unit (14) for transmitting the calculated pump output (PQ) for the purpose of correspondingly controlling the concrete pump (1).

14. Computer program with program code means for carrying out the steps according to at least claim 1, if the computer program is executed on an analysis unit (10) and evaluation unit (13) or a computer unit (15) of a device according to any one of claims 7 to 12.

15. Machine-readable medium or cloud storage on which the computer program of claim 14 is stored in a retrievable manner.

## Revendications

1. Procédé de commande du débit (P_{Q}) d'une pompe à béton (1) pour le remplissage d'un agencement de coffrage (2) avec une masse de remplissage pompable (3) en fonction de paramètres de matériau et d'environnement (RST) pertinents pour le durcissement, après quoi la masse de remplissage (3) incorporée durcit à l'intérieur de l'agencement de coffrage (2), comprenant l'étape consistant à :
- déterminer une vitesse de montée admissible (v_{SZ}) pour le remplissage de l'agencement de coffrage (2) avec la masse de remplissage (3) à l'aide des paramètres de matériau et d'environnement (RST), et **caractérisé par** les étapes supplémentaires consistant à :
- mesurer la pression statique de masse de remplissage (p_{F}) agissant sur l'agencement de coffrage (2) pendant le remplissage,
- calculer le débit admissible (P_{Q}) de la pompe à béton (1) en fonction de la vitesse de montée admissible (v_{SZ}) déterminée et de la pression statique de masse de remplissage (p_{F}) mesurée sur l'agencement de coffrage (2).

2. Procédé selon la revendication 1,
**caractérisé en ce que** les paramètres de matériau et d'environnement (RST) sont choisis parmi un groupe de paramètres comprenant : des données de formulation de masse de remplissage (R), des données dimensionnelles de coffrage (S), la température extérieure (T).

3. Procédé selon la revendication 2,
**caractérisé en ce que** les données de formulation de masse de remplissage (R), dont résulte ou peut être déduite en particulier une caractéristique de durcissement en fonction du temps spécifique au matériau, sont mises à disposition à partir d'informations de planification de construction existantes d'une base de données de planification de construction (11).

4. Procédé selon la revendication 2,
**caractérisé en ce que** les informations résultant des données dimensionnelles de coffrage (S), en particulier une hauteur de bétonnage, surface de bétonnage, épaisseur de mur par sections, sont mises à disposition à partir d'informations de planification de construction existantes de la base de données de planification de construction (11) .

5. Procédé selon la revendication 2,
**caractérisé en ce que** la température extérieure (T) est mesurée par un capteur de température sur un site de construction ou est mise à disposition par une base de données météorologique publique (12).

6. Procédé selon la revendication 1,
**caractérisé en ce que** la mesure de la pression statique de masse de remplissage (p_{F}) agissant sur l'agencement de coffrage (2) pendant le remplissage est effectuée par un système capteur de mesure (8) disposé au niveau de l'agencement de coffrage (2).

7. Dispositif pour la mise en oeuvre du procédé selon l'une des revendications précédentes, comprenant :
- une unité d'analyse (10) pour déterminer une vitesse de montée admissible (v_{SZ}) pour le remplissage de l'agencement de coffrage (2) avec la masse de remplissage (3) à l'aide des paramètres de matériau et d'environnement (RST), **caractérisé en ce que** le dispositif comprend en outre :
- un système capteur de mesure (8 ; 8') pour mesurer la pression statique de masse de remplissage (p_{F}) agissant sur l'agencement de coffrage (2) pendant le remplissage,
- une unité d'évaluation (13) pour calculer le débit admissible (P_{Q}) de la pompe à béton (1) en fonction de la vitesse de montée admissible (v_{SZ}) déterminée par l'unité d'analyse (10) et de la pression statique de masse de remplissage (p_{F}) sur l'agencement de coffrage (2) mesurée par le système capteur de mesure (8).

8. Dispositif selon la revendication 7,
**caractérisé en ce que** le système capteur de mesure (8) disposé au niveau de l'agencement de coffrage (2) pour mesurer la pression statique de masse de remplissage (p_{F}) est réalisé sous la forme d'un étrier de mesure (16) s'étendant sur des surfaces extérieures de coffrage (2a, 2b) opposées et comportant un capteur de mesure de pression ou de traction (17) intégré.

9. Dispositif selon la revendication 7,
**caractérisé en ce que** le système capteur de mesure (8') disposé au niveau de l'agencement de coffrage (2) pour mesurer la pression statique de masse de remplissage (p_{F}) est réalisé sous la forme d'un agencement de jauges de contrainte (18) appliqué sur au moins une partie de coffrage (2b) ou d'un transducteur de pression intégré.

10. Dispositif selon la revendication 7,
**caractérisé en ce que** l'unité d'analyse (10) est reliée à une base de données centrale de planification de construction (11), qui contient des enregistrements avec les informations de planification de construction nécessaires, d'où résultent les données de formulation de masse de remplissage (R) et/ou les données dimensionnelles de coffrage (S) .

11. Dispositif selon la revendication 7,
**caractérisé en ce que** pour la transmission des signaux de mesure, le système capteur de mesure (8) disposé sur l'agencement de coffrage (2) est en liaison au moins partiellement sans fil avec une unité de calcul (15) dans laquelle sont intégrées l'unité d'analyse (10) connectée à la base de données de planification de construction (11) et/ou l'unité d'évaluation (13).

12. Dispositif selon l'une des revendications 7 à 11 précédentes,
**caractérisé en ce que** la masse de remplissage pompable (3) est un béton coulé en place.

13. Dispositif selon l'une des revendications 7 à 12 précédentes,
**caractérisé en ce que** celui-ci est en liaison avec une unité de commande de pompe (14) pour la transmission du débit de pompe calculé (P_{Q}) en vue de la commande correspondante de la pompe à béton (1).

14. Programme d'ordinateur avec des moyens de code de programme pour la mise en oeuvre des étapes selon au moins la revendication 1, lorsque le programme d'ordinateur est exécuté sur une unité d'analyse (10) et une unité d'évaluation (13) ou une unité de calcul (15) d'un dispositif selon l'une des revendications 7 à 12.

15. Support de données lisible par machine ou mémoire en nuage, sur lequel ou dans laquelle le programme informatique selon la revendication 14 est enregistré de manière à être récupérable.
